# EUROPEAN PATENT APPLICATION

(11) **EP 2 602 971 A1**
(43) Date of publication of application: **12.06.2013**
(21) Application number: 12186389.8
(22) Date of filing: 27.09.2012
(51) Int. Cl.: H04L 29/08, H04L 12/58

(54) **Embedding active contextual information in a message**

(30) Priority: 09.12.2011 US 201113374075
(71) Applicant: Mitel Networks Corporation, Ottawa, ON K2K 2W7 (CA)
(72) Inventor: Soundrapandian, Suriyaprakash, 85226, AZ Arizona (US)
(74) Representative: Hewett, Jonathan Michael Richard

(57) **Abstract**

Technology for embedding active contextual information in a message is disclosed. One method comprises displaying information in a message on a computing device. The information is scanned for a selected term. A user interface representation for the selected term is displayed relative to the message. Active contextual information is provided from the server for the selected term to the computing device. The active contextual information is accessible via the user interface representation.

## Description

The present invention relates to display of contextual information, and particularly, but not exclusively to a method and system for displaying a user interface representation of active contextual information in a message.

The rapid development of mobile phones and other types of computing devices has significantly enhanced people's ability to communicate. Many people choose to communicate with others throughout the day via telephone, text messaging, and social networking.

As more people use mobile computing devices, such as smart phones and tablets, communication has trended away from voice communication, with a significant increase in communicating via text, such as email, texting, instant messaging, chatting, and the like.

According to an aspect of the present invention, there is provided a method for embedding active contextual information in a message, comprising displaying information in a message on a computing device, scanning the information for a selected term, displaying a user interface representation for the selected term in the message, and providing active contextual information from a server for the selected term to the computing device, wherein the active contextual information is accessible via the user interface representation that is associated with the message.

According to another aspect of the present invention, there is provided a system for displaying active contextual information in a message on a computing device, comprising an active data module operating on a server in communication with the computing device, and an active contextual information module configured to scan information in the message, identify a selected term in the message, and subscribe to the active data module to receive active contextual information for the selected term at the computing device, receive updated active contextual information from the active data module for the selected term when the active contextual information for the selected term changes, and display the active contextual information for the selected term on the computing device in a user interface representation associated with the message.

According to another aspect of the present invention, there is provided a computer program product, comprising a computer usable medium having a computer readable program code embodied therein, said computer readable program code adapted to be executed to implement a method for embedding active contextual information in a message, comprising displaying information in a message on a computing device; scanning the information for a selected term, displaying a user interface representation for the selected term in the message, and providing active contextual information from a server for the selected term to the computing device, wherein the active contextual information is accessible via the user interface representation associated with the message.

Optional features are set out in the dependent claims.

Features and advantages of the invention will be apparent from the detailed description which follows, taken in conjunction with the accompanying drawings, which together illustrate, by way of example, features of the invention; and, wherein:
Figure 1 illustrates an example of the use of an active contextual application in a chat application in accordance with an embodiment of the present invention;
Figure 2 illustrates examples of formatting a display depending on the active contextual information that is currently available in accordance with an embodiment of the present invention;
Figure 3 depicts a flow chart of a method for embedding active contextual information in a message in accordance with an embodiment of the present invention; and
Figure 4 illustrates an example of a block diagram of a system for displaying active contextual information in a message on a computing device.

Reference will now be made to the exemplary embodiments illustrated, and specific language will be used herein to describe the same. It will nevertheless be understood that no limitation of the scope of the invention is thereby intended.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "mobile computing device" refers to a computing device capable of wireless digital communication such as a smart phone, a tablet computing device, a laptop computer, a multimedia device such as an IPod Touch®, or other type computing device that provides text or voice communication.

As used herein, a "server" refers to a physical computer dedicated to running one or more service programs used to serve the needs of programs running on other computing devices that are in communication with the server. The service program(s) can serve the needs or requests of other programs which may or may not be running on the same computer. A server can be a system comprised of software and hardware that is dedicated to a specific purpose such as a database server, a file server, a mail server, a print server, a telephony server, a credentials server, and so forth. Alternatively, a single server can be used to provide multiple services.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

The increased use of mobile computing devices has significantly increased both the ability to communicate and the variety of formats in which a person can communicate. The use of voice communication and text communication, including email, text messaging, and instant messaging, allows a person to communicate using the means that will best accomplish the desired communication.

For instance, in certain situations, a quick voice phone call may be the most efficient means to communicate desired information, such as confirming whether a person is coming to a meeting and identifying whether the person's presentation is ready. A voice phone call can be more convenient when back and forth communication can occur between two or more people to quickly resolve multiple issues.

In other situations, an email, text, or the use of instant messaging may be more effective for communicating desired information. For example, to send information such as an address or phone number to someone, text communication can be used to provide the information in a fixed format, without requiring the receiving party to perform the additional step to write down or otherwise record the information. The selected format in which information is conveyed can depend on the type of device used to convey the information.

In a typical desktop computing environment, a number of different windows or screens can be used simultaneously or switched between with minimal effort. This allows a person to perform many separate tasks to identify multiple pieces of information. For example, a person may receive an email from a friend at work that asks the person whether they wanted to go and see a movie that evening. The person can use their desktop computer to switch from email to a web browser and open a first window to lookup the times that the movie is playing in a nearby theatre, and a second window to identify whether the movie is playing at another theatre. A third window can be opened to display an application that can be used to identify if the friend is currently at work and logged into his or her computer to identify how to respond to the friend. The information from the multiple windows can then be aggregated by the person to respond to the friend about the movie inquiry.

In contrast, the relatively small size of mobile computing devices can result in the need for different types of input and output to provide a more effectively communication experience. It can be substantially more difficult using a mobile computing device, such as a smart phone, to identify the same information discussed above, such as the movie play times at the two theatre along with determining if the friend is currently at work.

In order to allow multiple sources of content to be accessible in a single screen, an application can be used to scan text or other forms of information when the text or information is displayed in a message. When a selected term in the text or information contained in the message is identified then active contextual information can be associated with the term. The active contextual information can be displayed on a same screen as the text. The active contextual information can provide relatively up-to-date information. If the information changes, the active contextual information can be updated to reflect the change. The active contextual information may be associated with work related information or non-work related information. The active contextual information can significantly reduce the number of screens that are used to identify desired information.

For instance, using the previous example, a person may send text information (i.e. email, instant message, chat, text, etc.) to a friend from work about attending the movie. When the person types in the friend's name, a contextual information application operating on the person's desktop computer or mobile computing device that is connected with a server can identify the friend's name as an employee and provide active contextual information about the employee. The contextual information may include content such as whether the employee is at work, if the employee is on the phone, if the employee is currently using instant messaging, or another form of chat application, and so forth.

In addition to providing active contextual information about work related activities, the active contextual application can also provide other types of contextual information. For example, when the person types in a movie title, such as "Gone with the Wind", the server can be configured to scan nearby theaters and identify if and when the movie is playing. Information associated with the weather can be added to discussions about the weather. Sports scores can be added to terms associated with sports teams, and so forth. This information can then be displayed, or made operable for display, on the screen where the text or other information is entered or displayed.

For example, an active icon may be displayed relative to the text of the movie title in the message. If a person selects or activates the active icon, the movie times for the title can be displayed, along with links to allow the person to purchase movie tickets. When the text based inquiry is sent to the friend, the friend can view the same types of active contextual information using an active contextual application operating on the friend's computing device.

Accordingly, the use of the active contextual application can allow the person and the friend (on their respective computers) to identify all of the information needed to determine when and where the movie is playing, along with whether the person and the friend are currently at work. This information can be displayed on a single screen without the need to use other screens to identify this information. The use of the active contextual application can be convenient when using a desktop computer with a large display screen. Moreover, when using a relatively small display screen on a mobile computing device, the active contextual application can significantly enhance the capability and usefulness of the mobile computing device by allowing active information from multiple sources to be viewed in a single screen. A more detailed description will be provided below.

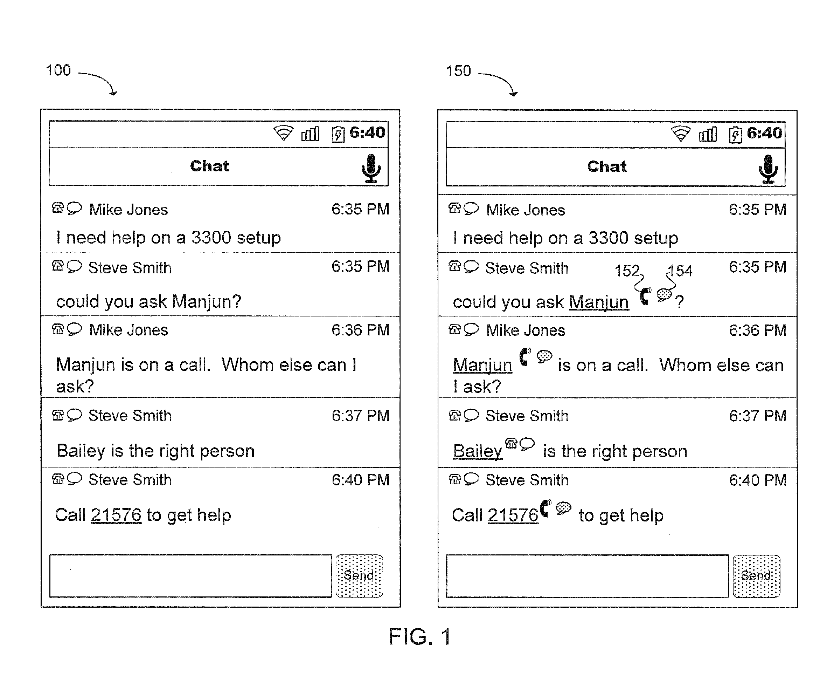

Figure 1 illustrates one example of the use of an active contextual application in a chat application relative to a chat application that contains only static links. In this example, a workplace chat application can be used to allow employees to communicate in near real-time. For instance, the employees may be telemarketers that are able to communicate with fellow employees using the chat application. The chat application can allow the employees to communicate while simultaneously being on the phone with a customer. The active contextual application can be used to provide desired information in a timely manner to enable the employees to more effectively handle the needs of the customers.

In this example chat application, a first window 100 is shown that includes only static links. A static link is a link, such as an HTML link, that is not able to be updated or changed once the link has been created. It merely provides a link to another window or application that a user can click on to see the information. A second window 150 is shown that includes active contextual information embedded with the text in the chat application. The active contextual information can be updated dynamically to provide current information. In addition, multiple levels of active contextual information displayed may be dynamically updated based on a change in the information. This will be discussed more fully below.

In each window 100, 150, the example chat represents a text communication between a first employee, Mike Jones and a second employee Steve Smith. The chat application in this example is operating on mobile computing devices. In this example, Mike Jones asks Steve Smith for help on a setup of a device, referred to by its part number, 3300. Steve Smith asks Mike Jones if he could ask another employee, Manjun, for help. Mike Jones may need to refer to a different application in another window to identify that Manjun is on a call and is not able to help. Once this is identified, he can continue his dialogue with Steve Smith, asking if another person is available to help. Steve Smith then replies that Bailey can help. Steve may then look up the extension to call Bailey using another application. When Steve enters the extension number into the chat, a static link in window 100 is created. The static link may lead to a window displaying information about the extension. Alternatively, the static link can also be used to activate a program, such as a program that places a telephone call to Bailey. However, once the static link has been formed, the type of link does not change, nor does the window that it points to. The static link will provide the same link each time it is selected.

In contrast, the window 150 can operate an active contextual application. The active contextual application can monitor terms and/or phrases in the chat application and provide active contextual information, as previously discussed. For example, the active contextual application may be part of a unified communication system, such as the Unified Communication Advanced (UCA) system operated by Mitel. The UCA system may be configured to monitor a chat application for phrases such as:
- Call <User | Number>;
- Chat with <User>;
- Any string greater or equal to the length of a telephone extension; and
- Any string more than five characters for a user name.

The active scanning of terms entered into the chat application or displayed by the chat application may be performed by the active contextual application or another application that is in communication with the active contextual application. In the example in window 150, the term "Manjun" is scanned and recognized as a user name by software operating on the mobile computing device. Alternatively, software operating on a server may be used to scan information entered at the mobile computing device. However, the use of a server side application to perform the scanning of text at the computing device may use an undesirable level of wired or wireless communications. When a client side application is used to scan the information, the client side application can be updated with information from the server on a regular basis at a desired frequency, such as once per day. Alternatively, any change in the data for the client side application may be pushed to each computing device by a server when the information is changed on the server. This enables the client side application to be up to date, while reducing the amount of network traffic used relative to a server side application.

When a selected term, such as a user name, a phone number, or another desired numeric or alphabetic string is discovered then the computing device (i.e. the mobile or fixed computing device on which the text is entered) can subscribe to a server to receive active contextual information related to the selected term. Upon subscription, the server can send the active contextual information back to the computing device. When a change occurs in the active contextual information, the server can push the changed data to the computing device.

In the example in window 150 in Figure 1, when the term "Manjun" is identified as a user name (i.e. an employee), then a subscription can be sent to a server for active contextual information associated with the user name. In this example, the active contextual information displayed in association with the user name includes an active telephone status icon 152 and an active chat status icon 154. The active telephone status icon 152 may show a handset, illustrating that the user's telephone is "off-hook". The active chat status icon 154 may be displayed in two formats to show when the user is, or is not, available for chat. For instance, a "grayed-out" icon, as shown next to Manjun's name, may be used to show that the user is not available for chat, while a full color or non-grayed-out icon, as shown next to Bailey's name, may be used to show that the user is available for chat. While telephone status and chat status are provided as examples, they are not intended to be limiting. A broad range of information may be provided by the server, based on the identified term, as previously discussed.

In the example in window 150 of Figure 1, when Steve Smith enters Manjun's name into the chat application, the user's active telephony status and chat status are displayed adjacent to Manjun's name. This allows Steve Smith to know Manjun's status without having to obtain the information from other locations. Similarly, when Steve Smith enters the term "Bailey", the term is scanned and recognized as a user name by software operating on the mobile computing device. The computing device can subscribe to a server to receive active contextual information related to the selected term "Bailey". In this example, the active contextual information is displayed as icons located adjacent to the selected term. The displayed icons show that the user Bailey is both available for chat and is not currently on the phone. If the information were to change, the server can push the new information to the computing device and the icons can be updated to actively show the change in status for the selected term, in this case a user name.

In addition to user names, active contextual information can also be related to a user's telephone extension. In window 150, the active status of the telephone extension "21576" is shown as being off-hook and not available for chat. In contrast, in window 100, no information is available about telephone extension "21576" without the user clicking on the link.

In the example of Figure 1, the chat application may operate either with or without the active contextual application operating on the client side. For instance, window 100 can be used to illustrate an example of Steve Smith operating on a computing device without the active contextual application running. Mike Jones, on the other hand, is using the active contextual application. When information from Steve Smith is conveyed to the chat application on Mike Jones' computing device, the information can be scanned to identify if any selected term exists in the conveyed information. A subscription can then be formed between Mike Jones' computing device and a server to provide active contextual information for the selected terms. Mike Jones can then use the active contextual information to make decisions more quickly without the need to use other sources to obtain the information.

While icons 152, 54 are shown in the example in Figure 1 for conveying the active contextual information, additional types of representation can be used as well. Any type of user interface representation can be used to display active contextual information for a selected term. The user interface representation can be in the form of text, graphics, audio, video, or a combination of these.

The user interface representation can also be multi-layered. When a person activates an icon or some other type of user interface representation, additional information can be displayed. An icon may be activated by selecting the icon using a mouse or touch screen, or hovering over the icon with a cursor. The information that is displayed when the icon is activated can depend on the active contextual information that is currently available.

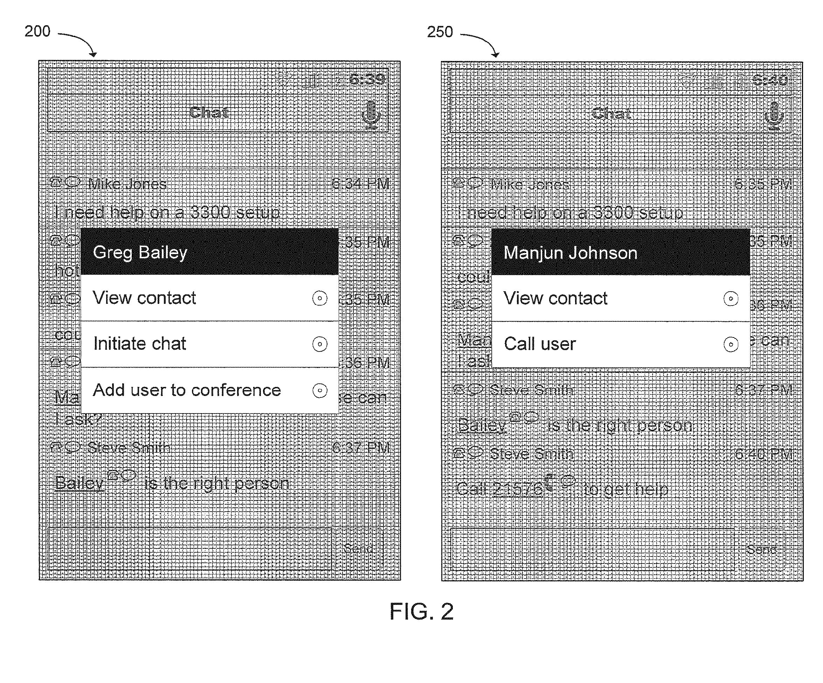

For example, Figure 2 provides two examples of a display of information when an icon is activated. In window 200, when a user activates one of the user interface representations associated with "Bailey", then additional information for employee Greg Bailey is provided. In this example, the user is provided additional choices without the need to activate other programs or open additional windows. The user can view Greg Bailey, initiate a chat, or add Greg to a conference call in this example.

In window 250, when a user activates one of the user interface representations associated with "Manjun", additional information is provided for employee Manjun Johnson. However, the information provided for Manjun is different from the information provided for Greg. The information that is provided can be dependent on the type of information provided in the previous level of the user interface representation. The information that is displayed can be dynamically formatted based on the contextual information that is provided. In the example provided in Figure 2, the first level of the user interface representation provides information that Greg is currently available for chat. However, Manjun is not available for chat. Therefore, different options are provided when the user interface representation is activated for the two employees. The information provided in the first level of the user interface representation is typically active information that can be updated by receiving new information from the server. The information provided in a second level, or other higher levels, can be static or active.

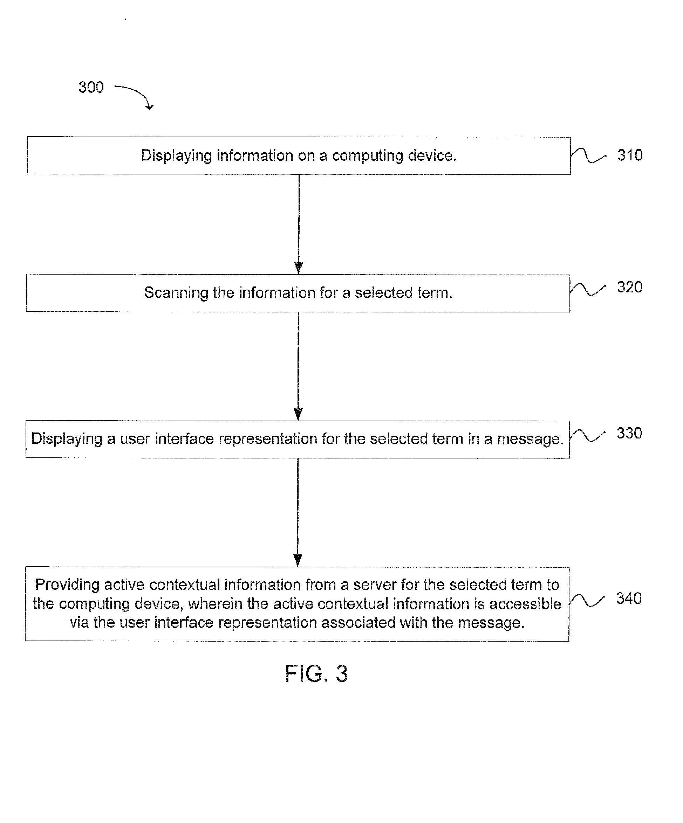

In another embodiment, a method 300 for embedding active contextual information in a message is disclosed, as depicted in the flow chart of Figure 3. In one embodiment, the message can be a near real-time message, such as a text message, an instant message, a chat application, and so forth. In another embodiment the message can include messages such as email that are typically not considered to be near real-time.

The method 300 comprises displaying 310 a message on a computing device. The information can be scanned 320 for a selected term. A user interface representation for the selected term can be displayed 330 in a message. Active contextual information can be provided 340 from a server for the selected term to the computing device. The active contextual information is accessible via the user interface representation that is associated with the message.

In one embodiment, a subscription for the active contextual information for the selected term may be sent from the computing device to the server. An update of the active contextual information can be pushed from the server to the computing device when the active contextual information changes. A display of the active contextual information may be formatted based on a content of the active contextual information, as illustrated in Figure 2. A selected set of actions may be dynamically provided to a user based on a content of the active contextual information. For instance, in Figure 2, different actions are provided for a user name that is available to chat relative to a user name that is not available to chat.

Each computing device can operate an active contextual information application used to scan information in a message, identify a selected term, and request a subscription for a server for active contextual information for the selected term. Thus, a user can send a message having active contextual information. The recipient of the message may or may not show the active contextual information in the message depending on whether the active contextual information application is operating on the recipient's computing device.

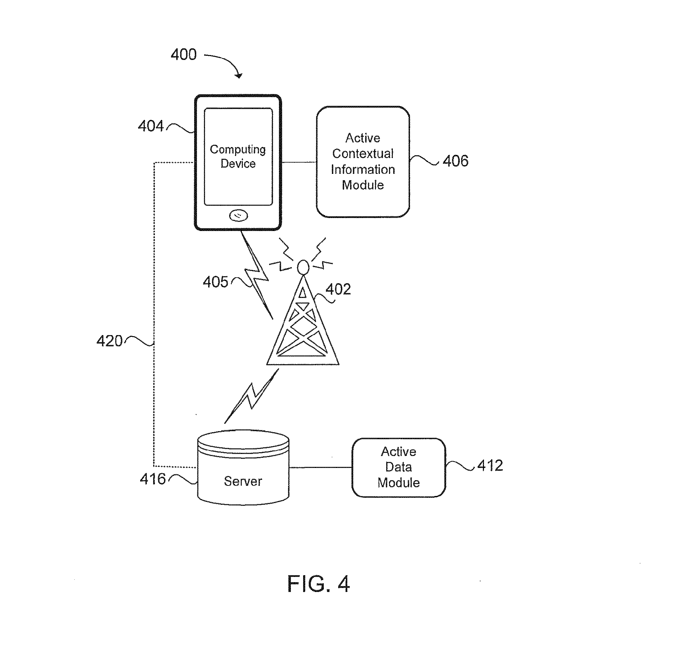

In another embodiment, a system 400 for displaying active contextual information in a message on a computing device is disclosed, as illustrated in Figure 4. The system comprises an active data module 412 operating on a server 416 that is in communication with the computing device 404. The server may communicate with the computing device via a wireless connection 405 through a wireless service provider 402. Alternatively, the computing device may connect with the server via a wired connection 420. The computing device can be a desktop type of computer, or a mobile computing device, as previously discussed.

The system 400 further comprises an active contextual information module 406 that is configured to: scan information in the message on the computing device 404; identify a selected term in the message; subscribe to the active data module to receive active contextual information for the selected term at the computing device; receive updated active contextual information from the active data module for the selected term when the active contextual information for the selected term changes; and display the active contextual information for the selected term on the computing device in a user interface representation associated with the message. The message may be a near real-time message, such as a text or instant message. However, active contextual information can continue to be updated and displayed for older messages, such as email, or the chat history of a chat application. Thus, the message displaying the active contextual information is not limited to a near real-time type of messages. The user interface representation may be an icon located adjacent the selected term. Alternatively, the user interface representation may be an area on the screen of the computing device that is used to display text, graphics, video, or other types of active contextual information associated with the selected term.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labelled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Various techniques, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, and the present invention is to be interpreted as encompassing combinations of compatible features of different embodiments, as would be understood by those skilled in the art.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the invention as defined by the claims. Accordingly, it is not intended that the invention be limited, except as by the claims set forth below.

## Claims

1. A method for embedding active contextual information in a message, comprising:
displaying information in a message on a computing device;
scanning the information for a selected term;
displaying a user interface representation for the selected term in the message;
and
providing active contextual information from a server for the selected term to the computing device, wherein the active contextual information is accessible via the user interface representation that is associated with the message.

2. The method of claim 1, wherein providing active contextual information further comprises:
sending a subscription from the computing device to the server for active contextual information for the selected term;
receiving the active contextual information at the computing device; and
displaying the active contextual information in the user interface representation for the selected term in the message.

3. The method of claim 1 or claim 2, further comprising:
pushing an update of the active contextual information from the server to the computing device when the active contextual information changes; and
displaying the updated active contextual information in the user interface representation for the selected term in the message.

4. The method of any one of the preceding claims, further comprising entering text in the message, wherein the message is a near real-time message selected from the group consisting of an instant message, a chat message, and a text message.

5. The method of any one of the preceding claims, wherein scanning the information for the selected term further comprises scanning the information for the selected term at the computing device using a client side application operating on the computing device.

6. The method of claim 1, further comprising formatting a display of the active contextual information and/or dynamically providing a selected set of actions to the user based on a content of the active contextual information.

7. The method of any one of the preceding claims, further comprising:
sending the message to a second computing device;
scanning the information for a selected term;
displaying the user interface representation for the selected term in the message at the second computing device; and
providing active contextual information from the server for the selected term to a user of the second computing device, wherein the active contextual information is accessible via the user interface representation in the message at the second computing device.

8. The method of any one of the preceding claims, further comprising displaying the user interface representation for the selected term in the message, wherein the user interface representation is an icon located adjacent to the selected term.

9. A system for displaying active contextual information in a message on a computing device, comprising:
an active data module operating on a server in communication with the computing device; and
an active contextual information module configured to:
scan information in the message;
identify a selected term in the message;
subscribe to the active data module to receive active contextual information for the selected term at the computing device;
receive active contextual information from the active data module for the selected term; and
display the active contextual information for the selected term on the computing device in a user interface representation associated with the message.

10. The system of claim 9 wherein the active contextual information module is configured to receive updated active contextual information from the active data module for the selected term when the active contextual information for the selected term changes, and wherein the updated active contextual information may be pushed from the server to the computing device when a change in the active contextual information occurs.

11. The system of claim 9 or claim 10, wherein the active contextual information application is configured to operate on the computing device, and the computing device may be one of a desktop computing device and a mobile computing device.

12. The system of any one of claims 9 to 11, wherein the message is a near real-time message.

13. The system of any one of claims 9 to 12, wherein the user interface representation is displayed in one of the message and a separate window on the computing device from the message.

14. The system of any one of claims 9 to 13, wherein the active contextual information application operates within a Unified Communication Advanced (UCA) system.

15. A computer program which, when executed by a processor, causes the method of any one of claims 1 to 8 to be performed.
